# EUROPEAN PATENT SPECIFICATION

(11) **EP 0 653 152 B1**
(45) Date of publication and mention of the grant of the patent: **02.01.1997**
(21) Application number: 94202950.5
(22) Date of filing: 12.10.1994
(51) Int. Cl.: A01D 45/02

(54) **A head member for picking maize provided with a stalk-cutter and adapted to be mounted to a combine harvester**
Maispflückvorsatz eines Mähdreschers mit einem Stengelschneider
Tête de récolte pour cueilleur à mais munie d'un hacheur de tiges et propre à être montée sur une moissonneuse-batteuse

(30) Priority: 16.11.1993 IT TO930861
(43) Date of publication of application: 17.05.1995
(73) Proprietor: CAPELLO F.LLI RENATO E FRANCESCO S.N.C., I-12020 Fraz. Madonna dell'Olmo (Cuneo) (IT)
(72) Inventor: Capello, Alberto, I-12022 Busca (Cuneo) (IT); Capello, Elio, I-12100 Cuneo (IT)
(74) Representative: Robba, Eugenio

(56) References cited:
- FR-A- 1 578 497
- FR-A- 2 246 219
- FR-A- 2 522 925
- FR-A- 2 599 931
- FR-A- 2 644 972
- US-A- 4 791 778

## Description

The present invention relates to a maize picking head member, provided with a stalk-cutter, to be fitted to a combine harvester, and more in particular to an improved head member of this type.

As it is known heads for picking up maize are formed by a plurality of generally U-shaped members, arranged side by side and connected to each other, in order to form a head having a desired width for picking up maize.

Such heads must accomplish two operations on the maize stalks or stems: one is a downward pushing action and the second is a cutting action at the base of the stems, while said stems or stalks are properly lowered by suitable rolls, or "squeezer rolls", for shredding the stems into small pieces and preparing the field for the next ploughing operation.

Until now the known heads have been formed by U-shaped members arranged side by side and provided with members for driving both the "squeezer rolls" and the stalk-cutter, such drive members usually comprising transmission chains and the like, receiving the motion from a suitable motor and transmitting said motion to the operating members.

Since a relevant amount of power is required by such machines, said motion-transmission members have not always proved themselves as the most suitable ones, namely they often caused remarkable drawbacks due to jamming and/or breaking.

Moreover, since it is desirable to precisely synchronize the motion of the squeezer rolls with that of the stalk-cutter blades, such kind of motion-transmission members may not be satisfactory in view of the basic characteristics that are typical of this kind of motion transmission members.

An object of the present invention is to overcome said drawbacks, by providing a U-shaped head member for maize picking provided with a stalk-cutter and adapted to be mounted to a combine harvester and equipped with squeezer rolls of different design, with positive and reliable members for transmitting the motion and for synchronizing said motion-transmitting members with the operating members, in such a manner as to avoid the above mentioned drawbacks of the maize picking heads with stalk-cutter of the prior art.

The head member for maize picking with a stalk-cutter according to the present invention comprises a cast U-shaped hollow member housing means for transmitting motion to the operating parts of the head member; said operating parts comprising a pair of spaced squeezer rolls, horizontally projecting outwards from the inner base portion of said U-shaped member and counter-rotating downwards, and a stalk-cutter roll projecting downwards from an arm of said U-shaped member, said squeezer rolls being rotated through two couplings of bevel gears, one for each roll, characterized in that downstream said bevel gears operating said squeezer rolls there is provided an additional coupling made up by spur-gears which drives a horizontal shaft connected by means of a bevel gear pair to the stalk-cutter roll, and in that the driven gear of said spur-gear pair is releasably engaged by the driving gear by means of an eccentric abutting against said driven gear and actuated by a control lever pivotally mounted on the outer arm of the member; so that said lever can assume two positions: an engagement position in which the eccentric does not contact the driven gear of said coupling so that the stalk-cutter rotates in synchronism with the squeezer rolls, and a disengagement position in which the eccentric has shifted the driven gear, so that the driving mechanism of the stalk-cutter is uncoupled from the driving means of the squeezer rolls.

A preferred characteristic of the present invention resides in that the stalk-cutter roll projecting from the arm of the U-shaped member is driven through a bevel gear pair by a shaft located inside such arm and in turn rotated by the above mentioned pair of gearwheels, and in that said stalk-cutter roll is slanted to the vertical by an angle α from 6° to 12°, and preferably from 8° to 10°.

It is to be noted that by using bevel and spur gearwheels for the transmission of the motion, the body and the arms of the U-shaped member have neither link members nor motion-transmitting parts projecting outwards as it happens in the prior art.

A further preferred characteristic of the present invention resides in that each U-shaped member of said head is provided with an friction clutch member placed on the rear side thereof; such friction clutch member being splined to the hexagonal main drive shaft of the machine, and transmitting the motion to the desired member thanks to the engagement of said friction clutch member with a splined shaft provided on each U-shaped member.

The invention will be now described in details referring to the attached drawings, provided by way of not limiting example, and illustrating an embodiment of the invention, in which:

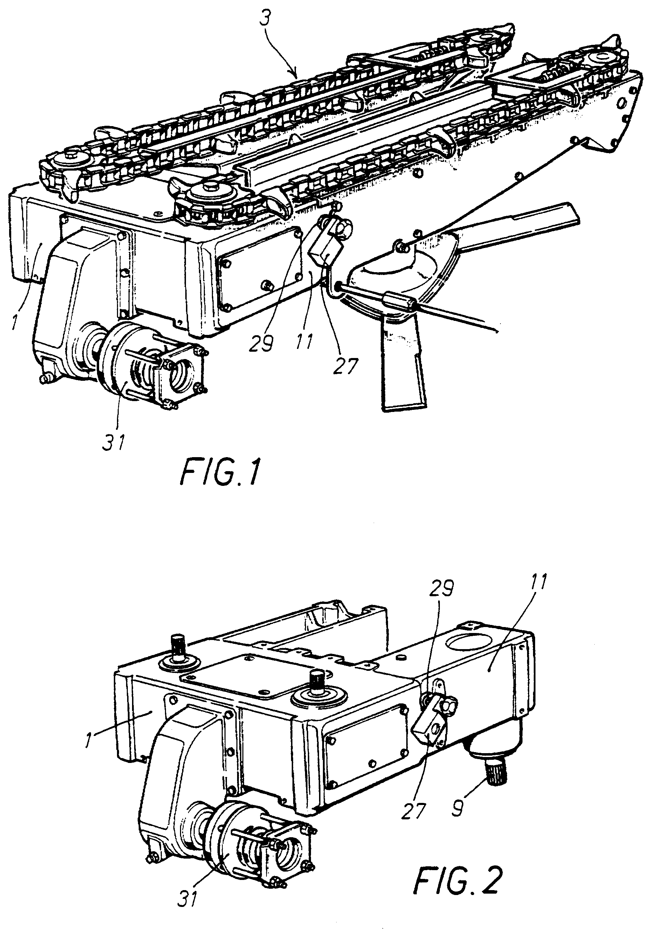

Fig. 1 is a rear prospective view of the subject U-shaped member provided with a stalk-cutters and pulling chains mounted to the member arms;
Fig. 2 is a rear perspective view of the subject U-shaped member;

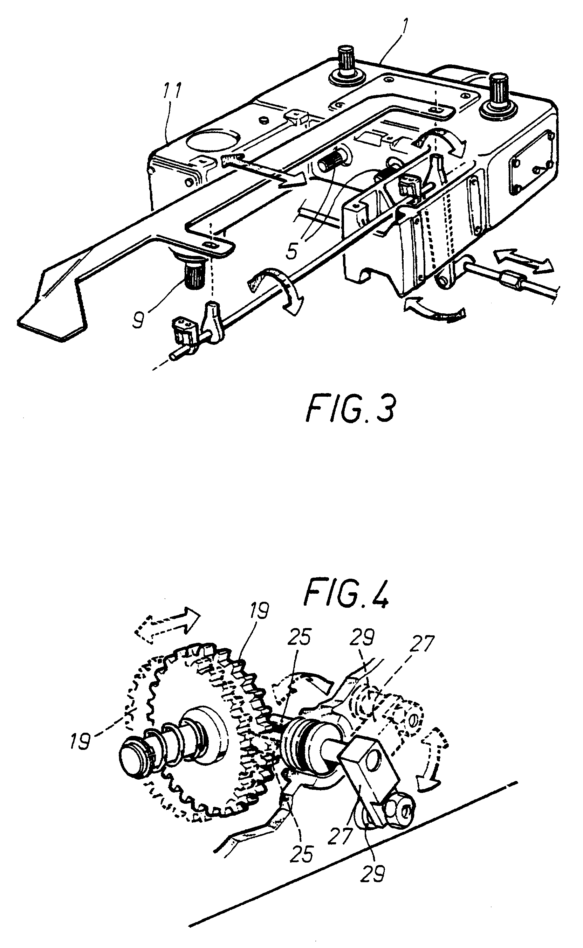

Fig. 3 is an exploded front view in perspective of the subject U-shaped member, with a piece of equipment that is going to be mounted to one arm thereof;
Fig. 4 is a perspective view showing the axial motion imparted by the control lever to the driven gearwheel for disengaging the drive means of the stalk-cutter shaft from that of the squeezer rolls;

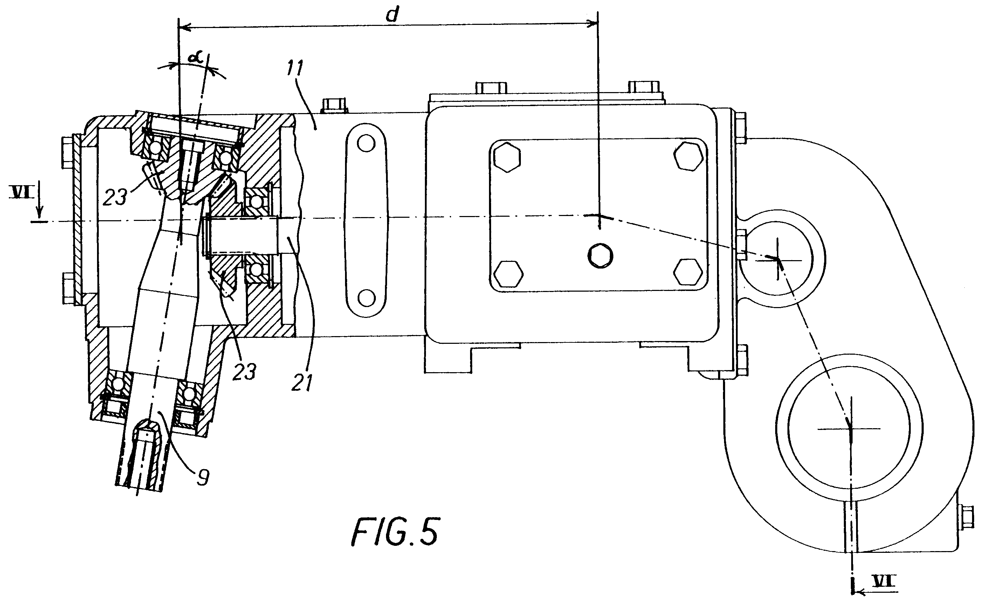

Fig. 5 is a partially cross-sectioned side view of the U-shaped member arm from which the stalk-cutter shaft projects;

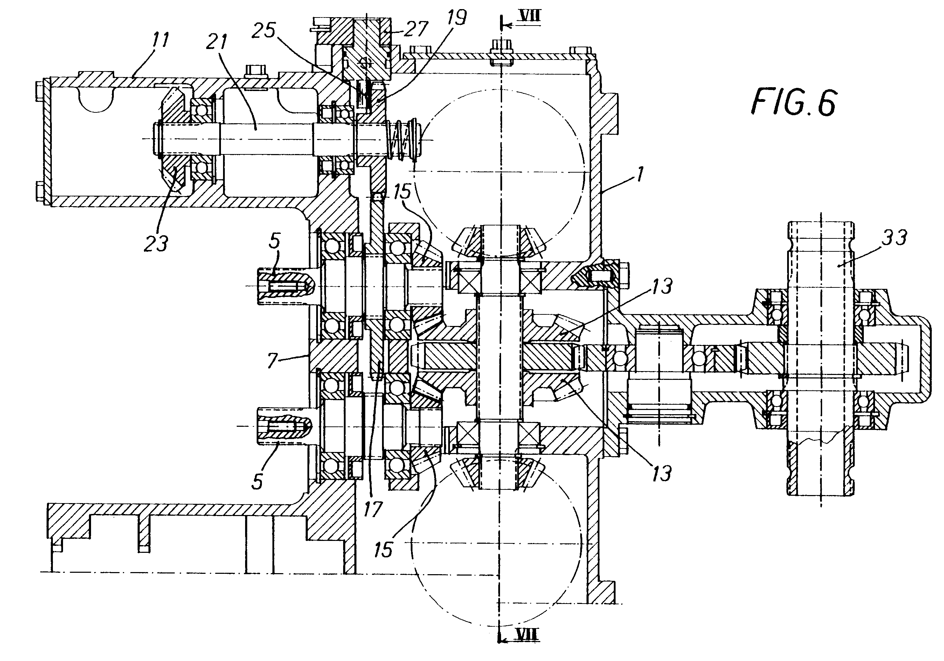

Fig. 6 is a cross-section view of the U-shaped member taken along line VI-VI of Fig. 5;

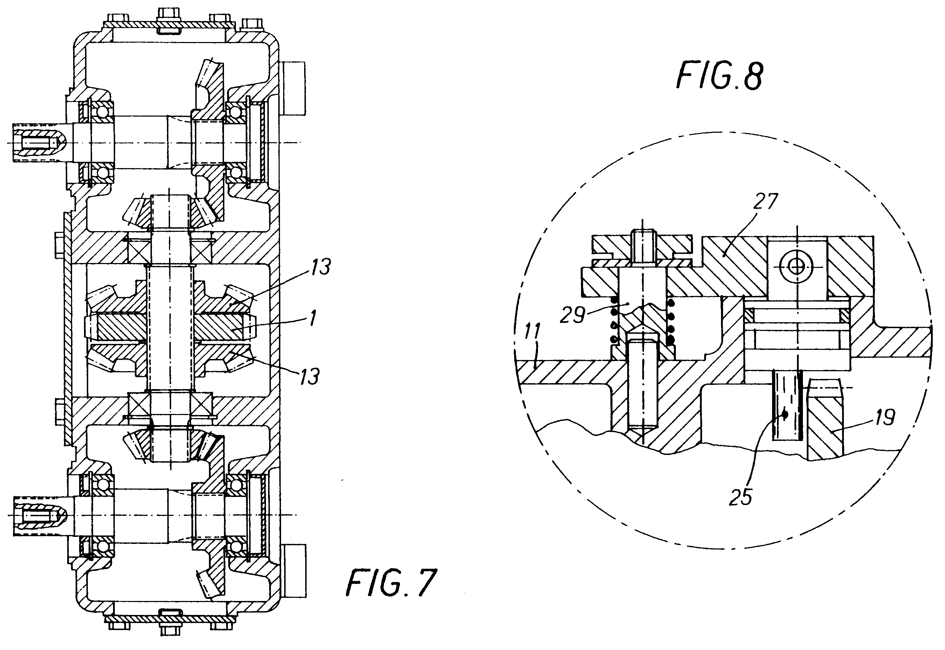

Fig. 7 is a cross-section view of Fig. 6 taken along line VII-VII and showing the motion imparted to the vertical rolls, which is similar to the motion imparted to the squeezer rolls;
Fig. 8 is detailed cross-section view of the eccentric control lever of the eccentric for shifting the gearwheel driven by the pair of gearwheels connecting the stalk-cutter with the squeezer rolls.

As it can be seen in the Figures, a member 1 of the head 3 for picking maize provided with a stalk-cutter according to the invention comprises a U-shaped substantially hollow member formed by casting and housing means for transmitting the motion to its operating parts.

Said operating parts substantially comprise a pair of spaced squeezer rolls 5, horizontally projecting outwards from the inner base portion 7 of said U and counter-rotating downwards, and a stalk-cutter roll 9 projecting downwards from an arm 11 of said U-shaped member.

The squeezer rolls 5 are rotated through two couplings of bevel gears 13 and 15; moreover downstream the bevel gears 15 driving the squeezer rolls 5 a further coupling of spur-gears 17, 19 is provided, which drives a horizontal shaft 21 connected by means of a bevel gear pair 23 to the stalk-cutter roll 9.

The driven gear 19 of said spur-gear pair 17, 19 is releasably engaged with the driving gear 17 by means of an eccentric 25 abutting against said driven gear 19 and actuated by a control lever 27 pivotally mounted on the outer arm 11 of the member 1 and provided with a pawl 29.

Thus the lever 27 can assume one of two positions: an engagement position as shown with solid line, in which the eccentric 25 does not contact the driven gearwheel 19 of said coupling so that the stalk-cutter 9 rotates in synchronism with the squeezer rolls 5, and a disengagement position shown with phantom line, in which the eccentric 25 has shifted the driven gearwheel 19, so that the driving mechanism of the stalk-cutter 9 is uncoupled from the driving means of the squeezer rolls 5.

The stalk-cutter roll 9 projecting from the arm 11 of the U-shaped member 1 and driven through a bevel gear pair 23 by a shaft 21 located inside such arm 11 and in turn rotated by the above mentioned pair of gearwheels 17, 19, is slanted to the vertical by an angle α from 6° to 12°, and preferably from 8° to 10°.

It is pointed out that thanks to the use of bevel and spur gearwheels for the transmission of the motion, the body and the arms of the U-shaped member 1 have neither link members nor motion-transmitting parts projecting outwards as it happens in the prior art.

A further characteristic of the present invention resides in that each U-shaped member 1 of said head 3 is provided with an friction clutch member 31 placed on the rear side thereof. Said friction clutch member 31 is splined to the hexagonal main drive shaft (not shown) of the machine, and transmits the motion to the desired member 1 thanks to the engagement of said friction clutch member 31 with a splined shaft 33 provided on each U-shaped member 1.

It is further pointed out that the distance d between the axis of the stalk-cutter roll 9 and the axis of the base of the U-shaped member 1, is between 320 and 240 mm, and preferably between 300 and 260 mm.

It is evident that the invention is not to be limited to the described and illustrated embodiment, but that several modifications and additional improvements can be carried out without departing from the scope thereof.

## Claims

1. A head member (3) for picking maize provided with a stalk-cutter and adapted to be mounted to a combine harvester, comprising a cast U-shaped hollow member (1) housing means for transmitting motion to the operating parts of the head member; said operating parts comprising a pair of spaced squeezer rolls (5), horizontally projecting outwards from the inner base portion (7) of said U-shaped member and counter-rotating downwards, and a stalk-cutter roll (9) projecting downwards from an arm (11) of said U-shaped member, said squeezer rolls (5) being rotated through two couplings of bevel gears (13, 15), one for each roll, characterized in that downstream said bevel gears (15) operating said squeezer rolls (5) there is provided an additional coupling made up by spur-gears (17, 19) which drives a horizontal shaft (21) connected by means of a bevel gear pair (23) to the stalk-cutter roll (9), and in that the driven gear (19) of said spur-gear pair (17, 19) is releasably engaged by the driving gear (17) by means of an eccentric (25) abutting against said driven gear (19) and actuated by a control lever (27) pivotally mounted on the outer arm (11) of the U-shaped hollow member (1); so that said lever (27) can assume one of two positions: an engagement position in which the eccentric (25) does not contact the driven gear (19) of said coupling so that the stalk-cutter (9) rotates in synchronism with the squeezer rolls (5), and a disengagement position in which the eccentric (25) has shifted the driven gear (19) so that the driving mechanism of the stalk-cutter (9) is uncoupled from the driving means of the squeezer rolls (5).

2. A head member (3) for picking maize provided with a stalk-cutter as claimed in claim 1, characterized in that the stalk-cutter roll (9) projecting from the arm (11) of the U-shaped member (1) is driven through a bevel gear pair (23) by a shaft (21) located inside such arm (11) and in turn rotated by the above mentioned pair of gearwheels (17, 19), and in that said stalk-cutter roll (9) is slanted to the vertical by an angle α from 6° to 12°, and preferably from 8° to 10°.

3. A head member (3) for picking maize provided with a stalk-cutter as claimed in claims 1 and 2, characterized in that the distance (d) between the axis of the stalk-cutter roll (9) and the axis of the base of the U-shaped member (1), is between 320 and 240 mm, and preferably between 300 and 260 mm.

4. A head member (3) for picking maize provided with a stalk-cutter as claimed in the preceding claims, characterized in that thanks to the use of bevel and spur gearwheels for the transmission of the motion, the body and the arms of the U-shaped member (1) have neither link members nor motion-transmitting parts projecting outwards.

5. A head member (3) for picking maize provided with a stalk-cutter as claimed in claim 1, characterized in that each U-shaped member (1) of said head (3) is provided with an friction clutch member (31) placed on the rear side thereof, said friction clutch member (31) being splined for connection to the hexagonal main drive shaft of the machine, and transmitting the motion to the operating parts of the U-shaped member (1) thanks to the engagement of said friction clutch member (31) with a splined shaft (33) provided on each U-shaped member (1).

## Patentansprüche

1. Maispflückvorsatz (3) eines Mähdreschers mit einem Stengelschneider, umfassend ein U-förmiges, hohles Guß-Bauelement (1), in dem Vorrichtungen für die Übertragung der Bewegung an die Betätigungsteile des Maispflückvorsatzes untergebracht sind, wobei diese Betätigungsteile ein Paar beabstandete Quetschwalzen (5) umfassen, die vom inneren Basisteil (7) des U-förmigen Bauelementes horizontal nach außen vorstehen und sich gegeneinander drehen, und eine Stengelschneidewalze (9), die von einem Arm (11) des U-förmigen Bauelements nach unten vorsteht, wobei die Quetschwalzen (5) durch zwei Kupplungen - je eine pro Walze - von Kegelrädern (13, 15) in Rotation versetzt werden, dadurch gekennzeichnet, daß den Kegelrädern (15), die die Quwetschwalzen (5) betätigen, nachgeschaltet eine zusätzliche Kupplung angeordnet ist, die aus Stirnrädern (17, 19) besteht, die eine horizontale Welle (21) antreiben, die mittels eines Kegelräder-Paares (23) mit der Stengelschneidewalze (9) verbunden ist, und dadurch, daß das angetriebene Stirnzahnrad (19) des Stirnräder-Paares (17, 19) in das Antriebszahnrad (17) mittels eines Exzenters lösbar eingreift, der gegen das angetriebene Stirnzahnrad (19) anliegt und durch einen Betätigungshebel (27) betätigbar ist, der schwenkbar am äußeren Arm (11) des U-förmigen, hohlen Bauelementes (1) befestigt ist, so daß der Hebel (27) jeweils eine von zwei Stellungen einnehmen kann : eine eingekuppelte Stellung, in der der Exzenter (25) mit dem angetriebenen Stirnzahnrad (19) der Kupplung nicht kämmt, so daß der Stengelschneider (9) sich synchron mit den Quetschrollen (5) dreht, und eine ausgekuppelte Stellung, in der der Exzenter (25) das angetriebene Stirnzahnrad (19) versetzt hat, so daß der Antriebsmechanismus des Stengelschneiders (9) von den Antriebsvorrichtungen der Quetschwalzen (5) ausgekuppelt ist.

2. Maispflückvorsatz (3) eines Mähdreschers mit einem Stengelschneider nach Anspruch 1, dadurch gekennzeichnet, daß die vom Arm (11) des U-förmigen Bauelementes (1) vorstehende Stengelschneidewalze (9) von einem Kegelräder-Paar (23) über eine in diesem Arm (11) angeordneten Welle (21) angetrieben ist und ihrerseits durch das Stirnräder-Paar (17, 19) in Rotation versetzbar ist, und daß die Stengelschneidewalze (9) in einem Winkel α von 6° bis 12° und vorzugsweise von 8° bis 10°, gegenüber der Vertikalen geneigt ist.

3. Maispflückvorsatz (3) eines Mähdreschers mit einem Stengelschneider nach Anspruch 1 und 2, dadurch gekennzeichnet, daß der Abstand (d) zwischen der Achse der Stengelschneidewalze (9) und der Achse der Basis des U-förmigen Bauelements (1) zwischen 320 und 240 mm und vorzugsweise zwischen 300 und 260 mm beträgt.

4. Maispflückvorsatz (3) eines Mähdreschers mit einem Stengelschneider nach Anspruch 1 bis 3, dadurch gekennzeichnet, daß dank der Verwendung von Kegelrädern und Stirnrädern für die Übertragung der Bewegung, der Körper und die Arme des U-förmigen Bauelementes (1) weder Verbindungsglieder noch bewegungs-übertragende Teile aufweisen, die nach außen vorstehen.

5. Maispflückvorsatz (3) eines Mähdreschers mit einem Stengelschneider nach Anspruch 1, dadurch gekennzeichnet, daß jedes U-förmige Bauelement (1) des Maispflückvorsatzes (3) mit einem Reibkupplungsteil (31) versehen ist, der an dessen Rückseite angeordnet ist, wobei der Reibkupplungsteil (31) zur Verbindung mit der Sechskant-Hauptantriebswelle der Maschine genutet ist und die Bewegung an die Betätigungsteile des U-förmigen Bauelementes (1) dank des Einkuppelns des Reibkupplungsteiles (31) mit einer genuteten Welle (33) überträgt, die an jedem U-förmigen Bauelement (1) angeordnet ist.

## Revendications

1. Une tête de récolte (3) pour cueillir du maïs, munie d'un hacheur de tiges et susceptible d'être montée sur une moissonneuse-batteuse, la tête comprenant un organe creux moulé en forme de U (1) logeant des moyens pour transmettre le mouvement aux parties actives de la tête de récolte; lesdites parties actives comprenant deux rouleaux presseurs espacés (5) faisant saillie horizontalement vers l'extérieur à partir de la partie de base intérieure (7) dudit organe en forme de U et tournant en sens inverse vers le bas, et un rouleau hacheur de tiges (9) faisant saillie vers le bas à partir d'un bras (11) dudit organe en forme de U, lesdits rouleaux presseurs (5) étant entraînés en rotation par deux engrenages à roues coniques (13, 15), à raison d'un pour chaque rouleau, caractérisé en ce qu'à l'aval desdites roues coniques (15) entraînant lesdits rouleaux presseurs (5) est prévu un engrenage additionnel constitué de roues droites (17, 19) qui entraîne un arbre horizontal (21) relié au moyen d'un engrenage à roues coniques (23) au rouleau hacheur de tiges (9), et en ce que la roue d'engrenage menée (19) dudit engrenage à roues droites (17,19) est engrenée de façon amovible par la roue d'engrenage menante (17) au moyen d'un excentrique (25) venant en butée contre ladite roue d'engrenage menée (19) et actionné par un levier de commande (27) monté pivotant sur le bras extérieur (11) dudit organe creux en forme de U (1), de telle façon que ledit levier (27) puisse prendre l'une parmi deux positions: une position d'engagement dans laquelle l'excentrique ne vient pas en contact avec la roue d'engrenage menée (19) dudit engrenage, de telle façon que le hacheur de tige (9) tourne en synchronisme avec les rouleaux presseurs (5), et une position de désengagement dans laquelle l'excentrique a déplacé la roue d'engrenage menée (19), de telle façon que le mécanisme d'entraînement du hacheur de tiges (9) soit désaccouplé des moyens d'entraînement des rouleaux presseurs.

2. Une tête de récolte (3) pour cueillir du maïs, munie d'un hacheur de tiges selon la revendication 1, caractérisée en ce que le rouleau hacheur de tiges (9) faisant saillie à partir du bras (11) de l'organe en forme de U (1) est entraîné au moyen d'un engrenage à roues coniques (23), par un arbre (21) disposé à l'intérieur dudit bras (11) et lui-même entraîné en rotation par l'engrenage à roues droites mentionné ci-dessus (17, 19), et en ce que ledit rouleau hacheur de tige (9) est incliné par rapport à la verticale d'un angle α compris entre 6° et 12°, et de préférence entre 8° et 10°.

3. Une tête de récolte (3) pour cueillir du maïs, munie d'un hacheur de tiges selon la revendication 1 ou 2, caractérisée en ce que la distance (d) entre l'axe du rouleau hacheur de tiges (9) et l'axe de la base de l'organe en forme de U (1) est comprise entre 320 et 240 mm, et de préférence entre 300 et 260 mm.

4. Une tête de récolte (3) pour cueillir du maïs, munie d'un hacheur de tiges, selon l'une des revendications précédentes, caractérisée en ce que grâce à l'utilisation d'engrenages à roues coniques et droites pour la transmission du mouvement, le corps et les bras de l'organe en forme de U (1) ne comportent ni organes de biellettes, ni pièces de transmission de mouvement faisant saillie vers l'extérieur.

5. Une tête de récolte (3) pour cueillir du maïs munie d'un hacheur de tiges, selon la revendication 1, caractérisée en ce que chaque organe en forme de U (1) de ladite tête (3) est muni d'un organe d'embrayage à friction (31) placé sur sa surface arrière, ledit organe d'embrayage à friction (31) étant cannelé pour être relié à l'arbre moteur principal hexagonal de la machine, et transmettant le mouvement aux parties actives de l'organe en forme de U (1), grâce à l'engagement dudit organe d'embrayage à friction (31) avec un arbre cannelé (33) prévu sur chaque organe en forme de U (1).
